# EUROPEAN PATENT SPECIFICATION

(11) **EP 1 986 397 B1**
(45) Date of publication and mention of the grant of the patent: **04.08.2010**
(21) Application number: 08103499.3
(22) Date of filing: 11.04.2008
(51) Int. Cl.: H04L 29/06

(54) **Reducing a number of registration termination messages in a network for cellular devices**
Reduktion der Anzahl von Eintragsendungsnachrichten in einem Netzwerk für Zellgeräte
Réduction du nombre d'enregistrements de messages de terminaison dans un réseau pour dispositifs cellulaires

(43) Date of publication of application: 29.10.2008
(73) Proprietor: HEWLETT-PACKARD DEVELOPMENT COMPANY, L.P., Houston, TX 77070 (US)
(72) Inventor: Ayers, John I., Omaha, NE 68154 (US); Askerup, Anders Hans, Omaha, NE 68154 (US); Chilukuri, Srinivas, Omaha, NE 68154 (US); Cameron, Jeffrey M., 68154, NE Omaha (US)
(74) Representative: Benson, Christopher

(56) References cited:
- US-A1- 2006 030 320
- "3rd Generation Partnership Project; Technical Specification Group Core Network and Terminals; IP Multimedia Subsystem CX and DX interfaces; Signalling flows and message contents (Release 7)" 3GPP TS 29.228 V7.5.0, 1 March 2007 (2007-03-01), pages 1-60, XP002495877
- "3rd generation Partnership Project; Technical Specification Group Core Network and Terminals; Cx and Dx interfaces based on the Diameter protocol; Protocol details (release 7)" 3GPPP TS 29.229 V7.5.0, 1 March 2007 (2007-03-01), pages 1-28, XP002495878

## Description

### TECHNICAL FIELD

Embodiments of the present invention relate to cellular devices. More specifically, embodiments of the present invention relate to reducing a number of registration termination messages in a network for cellular devices.

### BACKGROUND ART

A network of cellular devices can include, among other things, a server and a plurality of Call Session Control Functions (CSCFs). When a cellular device is turned on, it establishes communication with a CSCF that serves the cellular device. The CSCF allocates resources in order to provide a service that the cellular device has requested. The server has information pertaining to which CSCF the cellular device is communicating with because,the CSCFs send messages to the server when the cellular device initiates communication with the CSCFs.

"3GPP; Technical Specification Group Core Network and Terminals; IP Multimedia Subsystem CX and DX Interfaces; Signalling Flows and Message Contents"; Release 7, TS 29.228 V7.5.0, 1 March 2007, discloses that a Home Subscriber Service (HSS) checks whether deregistration of a previously assigned Call Session Control Function (CSCF) is required by comparing a Diameter client address of a newly assigned CSCF in a Multimedia Authentication Request (MAR) message to a Diameter client address stored in the HSS.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram of a network of cellular devices, according to one embodiment.
Figure 2 is a block diagram of a system for reducing a number of registration termination messages in a network of cellular devices, according to one embodiment.
Figure 3 is a flowchart for a method of reducing a number of registration termination messages in a network for cellular devices, according to one embodiment.
Figure 4 is a block diagram of a network of cellular devices, according to one embodiment.

The drawings referred to in this description should not be understood as being drawn to scale except if specifically noted.

### BEST MODE FOR CARRYING OUT THE INVENTION

Reference will now be made in detail to various embodiments of the invention as defined by the independent claims, examples of which are illustrated in the accompanying drawings. Furthermore, in the following description of various embodiments of the present invention, numerous specific details are set forth in order to provide a thorough understanding of the present invention. In other instances, well-known methods, procedures, components, and circuits have not been described in detail as not to unnecessarily obscure aspects of the present invention.

### OVERVIEW

When, for example, a cellular device is turned on, the cellular device establishes communication with a CSCF that is in cellular device's home network that provides service based on the user's subscription. The CSCF allocates resources in order to provide a service that the cellular device has requested. The Third Generation Partnership Project Technical Specification 29.228 version 6.13.0 states in the second paragraph of section 8.1.1 that it is possible for a new CSCF to be selected to provide service for the cellular device. When a new CSCF is selected, the server may initiate a termination request to the previous CSCF that was serving the cellular device. This can happen for example when a new CSCF is selected due to a failure in re-registration if the previously assigned CSCF does not respond to other network elements after a timeout. There are other error conditions or reconfiguration scenarios that may trigger the selection of a new CSCF. When, for example, the server encounters registration from a new CSCF, the cellular device is put into communication with the second CSCF. The second CSCF allocates resources in order to continue providing the service to the cellular device. The server has information pertaining to which CSCF the cellular device is communicating with because CSCFs exchange messages with the server.

The prior art requires a server to send termination messages to either all of the CSCFs or none of the CSCFs that it communicates with when a cellular device is assigned a new CSCF. Some CSCFs may not release resources unless they receive a termination message. Other CSCFs may not require the termination message to be sent to them. However, sending termination messages to CSCFs that do not require the notification significantly reduces the bandwidth of the network and therefore significantly reduces the number of services that the network can provide, for example, during peak hours.

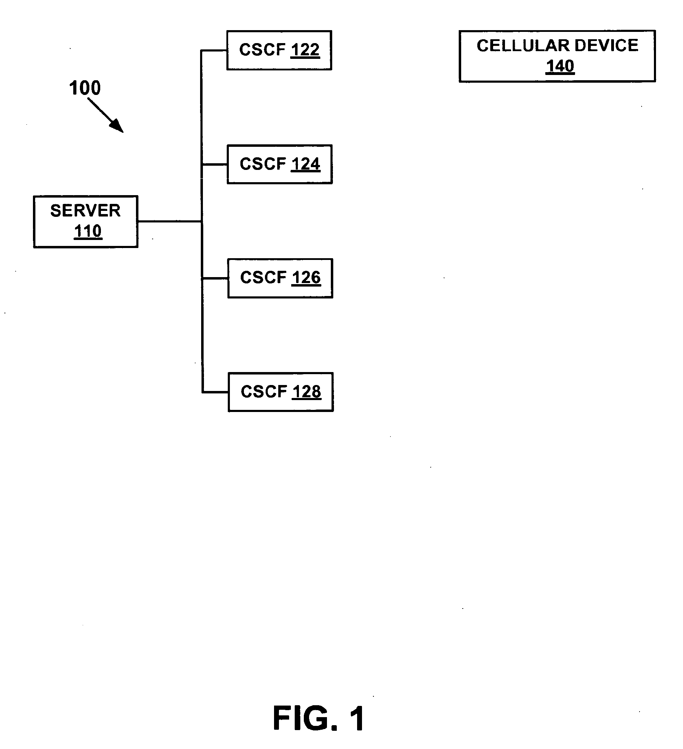

According to one embodiment, a registration termination message can be sent to one CSCF that communicates with a server without requiring the server to send a registration termination message to another CSCF that communicates with the server. For example, referring to Figure 1, assume that CSCF 122 requires a registration termination message and CSCF 124 does not require a registration termination message. If the cellular device 140's assignment is switched for example from CSCF 122 to CSCF 124, according to one embodiment, then logic associated with the server 110 determines to send a registration termination message to CSCF 122. However, if the cellular device 140's assignment is switched, for example, from CSCF 124 to CSCF 126, then logic associated with the server 110 determines to not send a registration termination message to CSCF 124. Therefore, the number of registration termination messages in a network 100 for cellular devices can be reduced.

### THE NETWORK

Figure 1 is a block diagram of a network 100 of cellular devices, according to one embodiment. As depicted in Figure 1, the network 100 includes a server 110, a plurality of CSCFs 122-128, which may be made by various manufacturers, and a cellular device that can undergo CSCF reassignment. The network 100 can also include cellular towers. Although various embodiments are not limited to any particular type of communication protocol, typically, a cellular device communicates with the cellular towers wirelessly and the cellular towers communicate with the CSCFs 122-128 using wired communications and the CSCFs 122-128 communicate with the server 110 using wired communications.

The server 110 according to one embodiment is a Hewlett Packard^{™} (HP^{™}) Home Subscriber Server. A network 110 can include more than one server 110. Each of the servers 110 can communicate with a plurality of CSCFs 122-128.

The cellular devices can be any type of electronic device that is capable of providing a service, for example, using a server and one or more CSCFs. A cellular device, according to one embodiment, is any type of device capable of providing a service using cellular communications. Examples of cellular devices include but are not limited to cell phones, personal device assistants (PDAs), and computers.

The CSCFs 122-128 may be provided by companies such as Cingular^{™} or Verizon^{™} and be made by various manufacturers such as Ericsson^{™} and Nokia^{™}. A CSCF is an example of a network entity.

Some CSCFs, such as newer types of CSCFs, may have logic that enables them to release resources in the event that a cellular device's assignment is switched to a different CSCF. However, other types of CSCFs, such as older CSCFs, may not release resources unless they receive a registration termination message. A conventional server would either always send out termination messages or never send out termination messages. Therefore, with a conventional server, CSCF that do not require a termination message would receive them anyway or CSCF that do require a termination message would not receive them.

According to one embodiment, if one CSCF requires a registration termination message when a cellular device's assignment is switched to a different CSCF but another CSCF does not require a registration termination message, then logic associated with the server 110 can determine to send a registration termination message to the CSCF that requires a registration termination message and determine to not send a registration termination message to the CSCF that does not require a registration termination message, as will become more evident.

### A SERVICE

Examples of a service that can be provided include phone calls, connecting to a network or the Internet, and accessing a service on a network or the Internet. A service can be any type of service that a cellular device is capable of providing, for example, over a network 100. According to one embodiment, a network 100 can use phone calls as a part of providing any type of service to a cellular device, such as accessing a network or the Internet.

### A SYSTEM FOR REDUCING A NUMBER OF REGISTRATION TERMINATION MESSAGES IN A NETWORK OF CELLULAR DEVICES

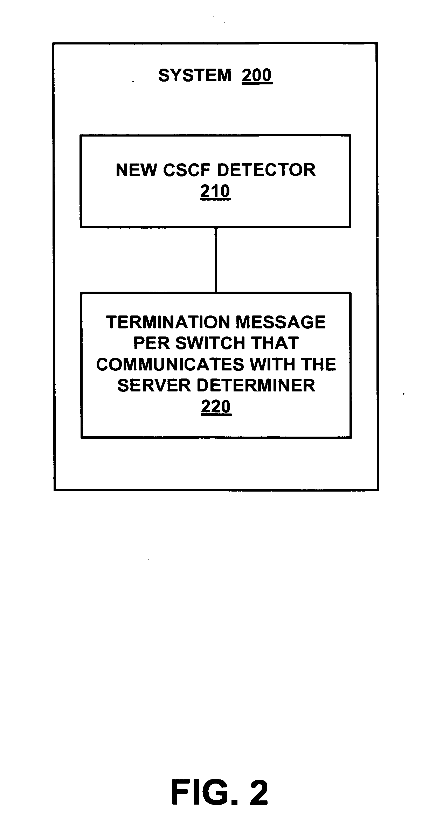

Figure 2 is a block diagram of a system 200 for reducing a number of registration termination messages in a network of cellular devices, according to one embodiment. The blocks depicted in Figure 2 represent features of the system 200. The blocks that represent features in Figure 2 can be arranged differently than as illustrated, and can implement additional or fewer features than what are described herein. Further, the features represented by the blocks in Figure 2 can be combined in various ways. The system 200 can be implemented using software, hardware, firmware, or a combination thereof.

The system 200 includes a new CSCF detector 210 (also referred to herein as a "detector") and a termination message per CSCF that communicates with the server determiner 220 (also referred to herein as a "determiner"). The system 200, according to one embodiment, resides at a server 110. The detector 210, according to one embodiment, is configured for determining at a server 110 that a new CSCF 124 associated with the network 100 is providing a service to a cellular device because, for example, the cellular device's assignment has been switched to a new CSCF. The determiner 220, according to one embodiment, is configured for determining whether to send a registration termination message to the previous CSCF 122. The determiner 220 enables the server 110 to send a registration termination message to one of a plurality of CSCFs 122-128 that communicate with the server 110 without requiring the server 110 to send a registration termination message to another of the plurality of CSCFs.

### A DATABASE

According to one embodiment, a server 110 has access to a database that includes various types of information. The database may be local to the server 110 or remote with respect to the server 110. The database can include server records, for example, for each server associated with a network. A server record can include a server identifier, such as an information technology (IT) address or a universal resource locator (URL), which uniquely identifies the server 110. The database can include CSCF records, for example, for each of the CSCFs in a network. The CSCF records can be used to determine which entities the server 110 interacts with to provide services. A CSCF record can include an identifier, such as a URL or an equipment identifier (ID), which uniquely identifies a CSCF. The CSCF record may include information that identifies the company that manufactured the equipment. The record may also include information indicating where the CSCF is geographically located. The database can also include information about cellular devices. The records for cellular devices can be used for example to determine which cellular devices are allowed to receive a service.

### PARAMETERS

The determiner 220, according to one embodiment, uses one or more parameters as a part of determining whether to send a registration termination message. Examples of these parameters include, but are not limited to, a CSCF identifier, a geographical location of a CSCF, the type of CSCF, and various date attributes. Examples of a CSCF identifier include but are not limited to a URL or equipment ID. The type of CSCF can indicate the company that made, sold, or that owns the CSCF. The type of CSCF can indicate a make or model of the CSCF.

### RULES

The determiner can analyze the parameters based on rules. A rule can use any type of Boolean logic to analyze any one or more parameters. For example, assume that Cingular^{™} CSCFs made by company A after 2005 may be capable of releasing resources without receiving a termination message. In this case, an example of a rule is do not send termination messages to Cingular^{™} CSCFs that are made by company A after 2005. The database, according to one embodiment, can be accessed to initialize one or more values of the parameters, for example, as a part of analyzing the parameters based on the rules. For example, one of the parameters may be a date which is set to the value of 2005. In another example, one of the parameters may be type of CSCF which is set to a value of Cingular^{™}. Another parameter may be the company that made the CSCF which can be set to the value company A.

According to one embodiment, the rules can use wild carding (where for example one or more characters are replaced with a wild card character such as "*") to specify a set or a range of CSCFs. For example, wild carding can be used to specify the CSCFs located in a particular geographical area. In another example, wild carding could be used to specify CSCFs associated with a particular company, such as Cingular^{™}. A range of CSCFs is considered to be one example of a set of CSCFs.

### INSTALLING AND CONFIGURING

Various methods can be used for installing, configuring, and modifying the system 200 depicted in Figure 2 on a server 110. For example, a technical person can physically go to where a server 110 is located and install or configure the system 200.

A tape that includes the system 200 or a general user interface (GUI) can be used to install the system 200 on a server 110 or to configure the system 200 on a server 110. In another example, the server 110 may include a GUI that enables the server 110 to be accessed remotely, for example, over a network or the Internet. The GUI can be accessed remotely and used to install the system 200 on a server 110 or to configure the system 200 on a server 110.

Examples of installing include but are not limited to installing the system 200, such as software instructions that provide the functionality of the detector 210 or the determiner 220, or a combination thereof. Installing may also include installing rules. Examples of configuring include but are not limited to initially installing rules or modifying rules that were already installed on a server 110.

### A METHOD OF REDUCING A NUMBER OF REGISTRATION TERMINATION MESSAGES IN A NETWORK OF CELLULAR DEVICES

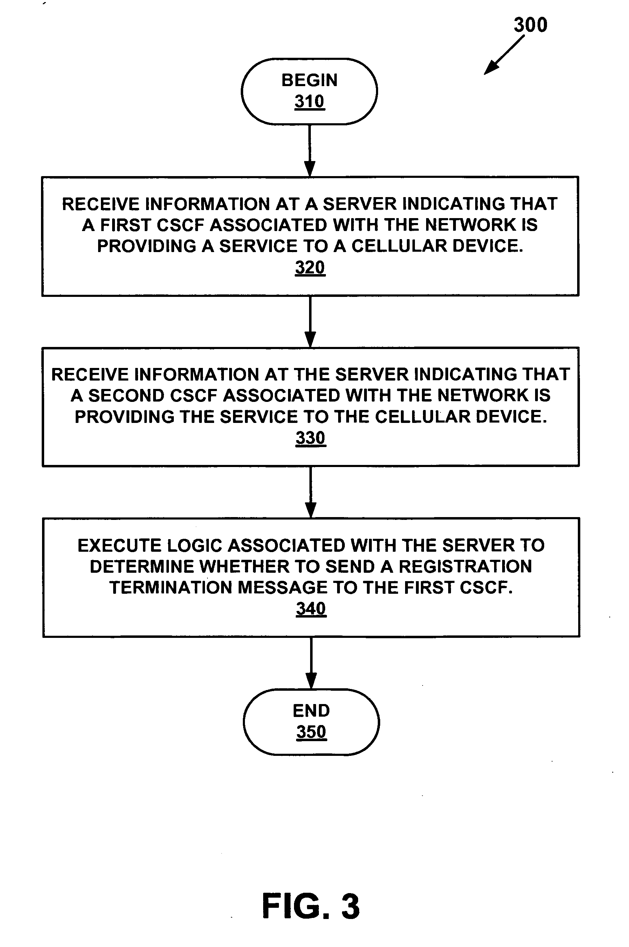

Figure 3 is a flowchart 300 for a method of reducing a number of registration termination messages in a network for cellular devices, according to one embodiment. Although specific steps are disclosed in flowchart 300, such steps are exemplary. That is, embodiments of the present invention are well suited to performing various other steps or variations of the steps recited in flowchart 300. It is appreciated that the steps in flowchart 300 may be performed in an order different than presented, and that not all of the steps in flowchart 300 may be performed.

All of, or a portion of, the embodiments described by flowchart 300 can be implemented using computer-readable and computer-executable instructions which reside, for example, in computer-usable media of a computer system or like device. As described above, certain processes and steps of the present invention are realized, in an embodiment, as a series of instructions (e.g., software program) that reside within computer readable memory of a computer system and are executed by the of the computer system. When executed, the instructions cause the computer system to implement the functionality of the present invention as described below.

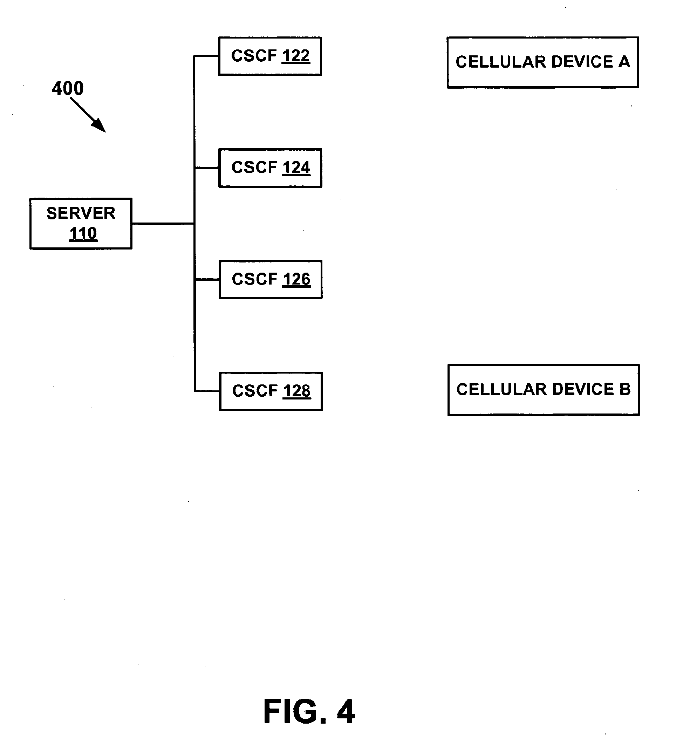

The following discussion of flowchart 300 shall refer to Figures 2 and 4. Assume that the system 200 (Figure 2) is installed on the server 110 (Figure 4). Further, assume that CSCF 122 is an older type of CSCF that is not capable of releasing resources without receiving a registration termination message but that CSCF 128 is a newer type of CSCF that is capable of releasing resources without receiving a registration termination message. Therefore, the rules the determiner 220 uses specify that a registration termination message will be sent to CSCF 122 when for example a cellular device A's assignment is switched from CSCF 122 to CSCF 124 but that a registration termination message will not be sent to CSCF 128 when for example a cellular device B's assignment is switched from CSCF 128 to CSCF 126.

In step 310, the method begins.

In step 320, information is received at a server indicating that a first CSCF associated with the network is providing a service to a cellular device. For example, assume that cellular device A is served by CSCF 122 and that cellular device B is served by CSCF 128. Cellular device A is turned on and cellular device B is turned on. The cellular devices A and B send messages to their respective CSCFs 122 and 128 requesting a service. The CSCFs 122 and 128 perform validation and communicate information pertaining to the validation to the server 110. The server 110 may either grant or deny the services requested by the cellular devices A and B. Assume that the server 110 grants the cellular device's (A and B) requests for their respective services. Connections are made to the cellular devices A and B and information pertaining to the cellular devices A and B is tracked.

In step 330, information is received at the server indicating that a second CSCF associated with the network is providing the service to the cellular device. For example, CSCF 128 and CSCF 122 may have failed for some reason. According to one embodiment, the new CSCF detector 210 (Figure 2) associated with the server 110 will determine that the cellular device's assignment will be switched from the previous CSCF to a new CSCF. In this illustration, CSCFs 122 and 128 are examples of previous CSCFs with respect to cellular devices A and B and CSCFs 124 and 126 are examples of new CSCFs with respect to cellular devices A and B.

In step 340, logic associated with the server is executed to determine whether to send a registration termination message to the first CSCF. According to one embodiment, system 200 is an example of logic that, according to one embodiment, enables the server 110 to send a registration termination message to one 122 of a plurality of CSCFs 122-128 that communicate with the server 110 without requiring the server 110 to send a registration termination message to another 128 of the plurality of CSCFs 122-128. For example, the determiner 220 (Figure 2) can execute rules and determine that a registration termination message is to be transmitted to CSCF 122 but that a registration termination message is not to be transmitted to CSCF 128.

In step 350, the method ends.

Although the discussion above of flowchart 300 described various embodiments in the context of a network that included one server, various embodiments are just as well suited for a network that includes more than one server. For example, assume that the network 300 includes another server B that also includes a system 200. Further, assume that the server communicates with CSCFs E-G. The logic associated with server B can enable it to send a registration termination message for example to CSCF E while not requiring server B to send a registration termination message to CSCF F.

### CONCLUSION

When a company, such as HP^{™}, sells a server, the company frequently guarantees that the server is capable of handling a certain number of services, such as phone calls, during peak hours. If the server can not handle that number of transactions, typically the company gives the customer enough servers so that the customer can meet the promised number of transactions. However, even giving servers away may not satisfy the customer's requirements because the customer may not have enough physical space to put the servers. Therefore, the ability for a server to provide as many calls during peak hours as possible significantly increases the probability that the company that sold the server will experience commercial success. Reducing the number of messages that the server has to handle increases the number of transactions the server can provide. Further, reducing the messages that the server has to handle increases the scalability of a network since, for example, less space would be used for the servers.

In densely populated areas, such as some areas of Los Angeles or New York City, resources for providing services to a cellular device may be scarce. Therefore, releasing resources when a cellular device's assignment is switched from a first CSCF to a second CSCF enables the first CSCF to reallocate those resources to another cellular device as quickly as possible, thus, reducing the likelihood that a cellular phone will be prevented from obtaining a service.

By reducing the number of registration termination messages, a user of a cellular device will more frequently be able to make a connection when initiating a phone call, will experience fewer dropped phone calls, and will experience a higher quality of service, among other things.

There has been a long felt need to reduce the number of registration termination messages in order to experience commercial success, to provide scalability, to provide better service in densely populated areas, and to improve a cellular device user's experience. However, despite this long felt need, others have failed to recognize the source of the problem and to solve the problem.

Various embodiments have been described in various combinations. However, any two or more embodiments may be combined. Further, any embodiment may be used separately from other embodiments.

Embodiments of the present invention are thus described. While the present invention has been described in particular embodiments, it should be appreciated that the present invention should not be construed as limited by such embodiments, but rather construed according to the following claims.

## Claims

1. A method of reducing a number of registration termination messages in a network (100) for cellular devices (140), the method comprising:
receiving (320) information at a server (110) indicating that a first call session control function (122) associated with the network (100) is providing a service to a cellular device (140); and
receiving (330) information at the server (110) indicating that a second call session control function (124) associated with the network (110) is providing the service to the cellular device (140);
**characterised by**:
executing (340) logic (200) associated with the server (110) to determine whether the first call session control function (122) requires a registration termination message to release resources allocated by the first call session control function (122) to provide the service to the cellular device (140) when the second call session control function (124) provides the service to the cellular device (140), wherein the logic (200) enables the server (110) to send the registration termination message to the first call session control function (122) when the first call session control function (122) requires the registration termination message to release the resources, and not to send the registration termination message to the first call session control function (122) when the first call session control function does not require the registration termination message to release the resources.

2. The method as recited by Claim 1, further comprising:
receiving a rule that when executed enables the determination of whether to send the registration termination message to the first call session control function (122).

3. The method as recited by Claim 2, wherein the receiving of the rule further comprises:
receiving a rule that specifies one or more parameters that when executed enables the determination of whether to send the registration termination message to the first call session control function (122) based on the one or more parameters.

4. The method as recited by Claim 3, wherein the receiving of the rule further comprises:
receiving a rule for specifying the one or more parameters based on Boolean logic.

5. The method as recited by Claim 3, wherein the one or more parameters are selected from a group consisting of a network entity identifier, a geographical location of a network entity, a manufacturer of a network entity, an owner of a network entity, a type of network entity identifier, and a date.

6. The method as recited by Claim 3, further comprising: accessing a database associated with the server (110) to initialize any one of the one or more parameters.

7. The method as recited by Claim 3, wherein the receiving of the rule further comprises:
receiving a rule that uses wild carding to specify a set of network entities.

8. A system for reducing a number of registration termination messages in a network for cellular devices (140), the system comprising:
a second call session control function detector (210) configured for detecting at a server (110) that a second call session control function (124) associated with the network is providing a service to a cellular device (140); and
a determiner (220) configured for determining whether the first call session control function (122) requires a registration termination message to release resources allocated by an first call session control function (122) to provide the service to the cellular device (140) when the second call session control function (124) provides the service to the cellular device (140), wherein the logic (200) enables the server (110) to send the registration termination message to the first call session control function (122) when the first call session control function (122) requires the registration termination message to release the resources, and not to send the registration termination message to the first call session control function (122) when the first call session control function (122) does not require the registration termination message to release the resources.

9. The system of Claim 8, wherein the server (110) is a Hewlett Packard™ Home Subscriber Server.

10. The system of Claim 8, wherein the cellular device (110) is selected from a group consisting of a cellular phone, a personal digital assistant (PDA), and a computer.

## Patentansprüche

1. Verfahren zur Reduktion der Anzahl von Eintragsendungsnachrichten in einem Netzwerk (100) für Zellgeräte (140), wobei das Verfahren umfasst:
Empfangen (320) von Information an einem Server (110), die anzeigt, dass eine erste Anruf-Sitzung-Kontrollfunktion (122), die dem Netzwerk (100) zugeordnet ist, einen Dienst an ein Zellgerät (140) bereitstellt; und
Empfangen (330) von Information an dem Server (110), die anzeigt, dass eine zweite Anruf-Sitzung-Kontrollfunktion (124), die dem Netzwerk (100) zugeordnet ist, den Dienst an das Zellgerät (140) bereitstellt;
**gekennzeichnet durch**:
Ausführen (340) von Logik (200), die dem Server (110) zugeordnet ist, um zu bestimmen, ob die erste Anruf-Sitzung-Kontrollfunktion (122) eine Eintragsendungsnachricht erfordert, um Ressourcen freizugeben, die von der ersten Anruf-Sitzung-Kontrollfunktion (122) zugeteilt werden, um den Dienst an das Zellgerät (140) bereitzustellen, wenn die zweite Anruf-Sitzung-Kontrollfunktion (124) den Dienst an das Zellgerät (140) bereitstellt, wobei es die Logik (200) dem Server (110) ermöglicht, die Eintragsendungsnachricht an die erste Anruf-Sitzung-Kontrollfunktion (122) zu senden, wenn die erste Anruf-Sitzung-Kontrollfunktion (122) die Eintragsendungsnachricht benötigt, um die Ressourcen freizugeben, und die Eintragsendungsnachricht nicht an die erste Anruf-Sitzung-Kontrollfunktion (122) zu senden, wenn die erste Anruf-Sitzung-Kontrollfunktion die Eintragsendungsnachricht nicht benötigt, um die Ressourcen freizugeben.

2. Verfahren nach Anspruch 1, weiter umfassend:
Empfangen einer Regel, die es, wenn sie ausgeführt wird, ermöglicht, zu bestimmen, ob die Eintragsendungsnachricht an die erste Anruf-Sitzung-Kontrollfunktion (122) gesendet wird.

3. Verfahren nach Anspruch 2, wobei das Empfangen der Regel weiter umfasst:
Empfangen einer Regel, die einen oder mehr Parameter spezifiziert, die es, wenn sie ausgeführt wird, ermöglicht, zu bestimmen, ob die Eintragsendungsnachricht an die erste Anruf-Sitzung-Kontrollfunktion (122) gesendet wird, basierend auf dem einen oder mehr Parameter.

4. Verfahren nach Anspruch 3, wobei das Empfangen der Regel weiter umfasst:
Empfangen einer Regel zur Spezifizierung des einen oder mehr Parameter, basierend auf Boole'scher Logik.

5. Verfahren nach Anspruch 3, wobei der eine oder mehr Parameter aus einer Gruppe ausgewählt ist/sind, bestehend aus einem Netzwerkeinheit-Identifizierer, einer geografischen Stelle einer Netzwerkeinheit, einem Hersteller einer Netzwerkeinheit, einem Besitzer einer Netzwerkeinheit, einem Typ von Netzwerkeinheit-Identifizierer und einem Datum.

6. Verfahren nach Anspruch 3, weiter umfassend: Zugreifen auf eine Datenbank, die dem Server (110) zugeordnet ist, um irgendeinen der einen oder mehr Parameter zu initialisieren.

7. Verfahren nach Anspruch 3, wobei das Empfangen der Regel weiter umfasst:
Empfangen einer Regel, die Platzhalter (Wildcards) verwendet, um einen Satz von Netzwerkeinheiten zu spezifizieren.

8. System zur Reduktion der Anzahl von Eintragsendungsnachrichten in einem Netzwerk für Zellgeräte (140), wobei das System umfasst:
einen zweiten Anruf-Sitzung-Kontrollfunktion-Detektor (210), der derart konfiguriert ist, dass er an einem Server (110) erkennt, dass eine zweite Anruf-Sitzung-Kontrollfunktion (124), die dem Netzwerk zugeordnet ist, einen Dienst an ein Zellgerät (140) bereitstellt; und
einen Bestimmer (220), der derart konfiguriert ist, dass er bestimmt, ob die erste Anruf-Sitzung-Kontrollfunktion (122) eine Eintragsendungsnachricht benötigt, um Ressourcen freizugeben, die durch eine erste Anruf-Sitzung-Kontrollfunktion (122) zugeteilt werden, um den Dienst an das Zellgerät (140) bereitzustellen, wenn die zweite Anruf-Sitzung-Kontrollfunktion (124) den Dienst an das Zellgerät (140) bereitstellt, wobei es die Logik (200) dem Server (110) ermöglicht, die Eintragsendungsnachricht an die erste Anruf-Sitzung-Kontrollfunktion (122) zu senden, wenn die erste Anruf-Sitzung-Kontrollfunktion (122) die Eintragsendungsnachricht benötigt, um die Ressourcen freizugeben, und die Eintragsendungsnachricht nicht an die erste Anruf-Sitzung-Kontrollfunktion (122) zu senden, wenn die erste Anruf-Sitzung-Kontrollfunktion (122) die Eintragsendungsnachricht nicht benötigt, um die Ressourcen freizugeben.

9. System nach Anspruch 8, wobei der Server (110) ein Hewlett Packard^{™} Home Subscriber Server ist.

10. System nach Anspruch 8, wobei das Zellgerät (110) aus einer Gruppe ausgewählt ist, bestehend aus einem Mobiltelefon, einem Personal Digital Assistant (PDA) und einem Computer.

## Revendications

1. Procédé de réduction d'un nombre de messages de fin d'enregistrement dans un réseau (100) destiné à des dispositifs cellulaires (140), le procédé comprenant :
la réception (320) d'informations sur un serveur (110) indiquant qu'une première fonction de commande de session d'appel (122) associée au réseau (100) fournit un service à un dispositif cellulaire (140); et
la réception (330) d'informations sur le serveur (110) indiquant qu'une seconde fonction de commande de session d'appel (124) associée au réseau (100) fournit le service au dispositif cellulaire (140);
**caractérisé par** :
l'exécution (340) d'une logique (200) associée au serveur (110) pour déterminer si la première fonction de commande de session d'appel (122) requiert un message de fin d'enregistrement pour libérer les ressources attribuées par la première fonction de commande de session d'appel (122) afin de fournir le service au dispositif cellulaire (140) lorsque la seconde fonction de commande de session (124) fournit le service au dispositif cellulaire (140), la logique (200) permettant que le serveur (110) envoie le message de fin d'enregistrement à la première fonction de commande de session d'appel (122) lorsque cette dernière (122) requiert le message de fin d'enregistrement pour libérer les ressources, et n'envoie pas le message de fin d'enregistrement à la première fonction de commande de session d'appel (122) lorsque cette dernière ne requiert pas le message de fin d'enregistrement pour libérer les ressources.

2. Procédé selon la revendication 1, comprenant en outre :
la réception d'une règle qui, lorsqu'elle est exécutée, permet de déterminer si le message de fin d'enregistrement doit être envoyé à la première fonction de commande de session d'appel (122).

3. Procédé selon la revendication 2, dans lequel la réception de la règle comprend en outre :
la réception d'une règle précisant un ou plusieurs paramètres qui, lorsqu'elle est exécutée, permet de déterminer si le message de fin d'enregistrement doit être envoyé à la première fonction de commande de session d'appel (122) sur la base du ou des paramètres.

4. Procédé selon la revendication 3, dans lequel la réception de la règle comprend en outre :
la réception d'une règle permettant de préciser un ou plusieurs paramètres sur la base d'une logique booléenne.

5. Procédé selon la revendication 3, dans lequel le ou les paramètres sont choisis dans un groupe consistant en un identificateur d'entité réseau, un emplacement géographique d'une entité réseau, un fabricant d'une entité réseau, un propriétaire d'une entité réseau, un type d'identificateur d'entité réseau et une date.

6. Procédé selon la revendication 3, comprenant en outre : l'accès à une base de données associée au serveur (110) pour initialiser le ou un quelconque des paramètres.

7. Procédé selon la revendication 3, dans lequel la réception de la règle comprend en outre :
la réception d'une règle qui utilise des caractères génériques pour indiquer un jeu d'entités réseau.

8. Système de réduction d'un nombre de messages de fin d'enregistrement dans un réseau destiné à des dispositifs cellulaires (140), le système comprenant :
une seconde fonction de commande de session d'appel (210) conçue pour détecter sur un serveur (110) qu'une seconde fonction de commande de session d'appel (124) associée au réseau fournit un service à un dispositif cellulaire (140); et
un système de détermination (220) conçu pour déterminer si la première fonction de commande de session d'appel (122) requiert un message de fin d'enregistrement pour libérer les ressources attribuées par une première fonction de commande de session d'appel (122) afin de fournir le service au dispositif cellulaire (140) lorsque la seconde fonction de commande de session (124) fournit le service au dispositif cellulaire (140), la logique (200) permettant que le serveur (110) envoie le message de fin d'enregistrement à la première fonction de commande de session d'appel (122) lorsque cette dernière (122) requiert le message de fin d'enregistrement pour libérer les ressources, et n'envoie pas le message de fin d'enregistrement à la première fonction de commande de session d'appel (122) lorsque cette dernière ne requiert pas le message de fin d'enregistrement pour libérer les ressources.

9. Système selon la revendication 8, dans lequel le serveur (110) est un serveur d'abonnés domestiques Hewlett Packard^{MC}.

10. Système selon la revendication 8, dans lequel le dispositif cellulaire (110) est choisi dans un groupe consistant en un téléphone cellulaire, un assistant numérique personnel (PDA) et un ordinateur.
